# EUROPÄISCHE PATENTSCHRIFT

(11) **EP 2 580 497 B1**
(45) Veröffentlichungstag und Bekanntmachung des Hinweises auf die Patenterteilung: **21.01.2015**
(21) Anmeldenummer: 11730195.2
(22) Anmeldetag: 08.06.2011
(51) Int. Cl.: F16H 63/30, F16H 63/22, F16H 63/34

(54) **BETÄTIGUNGSVORRICHTUNG FÜR EIN SCHALTGETRIEBE**
ACTUATING DEVICE FOR CHANGE GEAR TRANSMISSION
DISPOSITIF D'ACTIONNEMENT POUR UNE BOÎTE DE VITESSES

(30) Priorität: 14.06.2010 DE 102010017359
(43) Veröffentlichungstag der Anmeldung: 17.04.2013
(73) Patentinhaber: Koki Technik Transmission Systems GmbH, 09399 Niederwürschnitz (DE)
(72) Erfinder: BLEICHER, Norbert, 07546 Gera (DE); FUCHS, Carsten, 09127 Chemnitz (DE); PREISER, Markus, 78462 Konstanz (DE)
(74) Vertreter: Arat, Dogan
(86) Internationale Anmeldenummer: PCT/EP2011/002798
(87) Internationale Veröffentlichungsnummer: WO 2011/157371

(56) Entgegenhaltungen:
- EP-A2- 1 271 014
- DE-A1- 10 309 407
- DE-A1-102008 052 139
- JP-A- 4 083 958

## Beschreibung

### Gebiet der Erfindung

Die Erfindung betrifft eine Betätigungsvorrichtung für ein Schaltgetriebe nach dem Oberbegriff des Anspruchs 1, wie aus der EP 1 271 014 A2 bekannt.

### Stand der Technik

Aus dem Stand der Technik sind Schaltgetriebe bekannt, die über mehrere Vorwärtsgänge und einen Rückwärtsgang verfügen. Bei Einlegen des Rückwärtsgangs ist besonders zu berücksichtigen, dass die Eingangswelle des Getriebes für eine Synchronisierung mit dem Rückwärtsgang synchronisiert werden muss. Die dabei auftretende Synchronleistung beim Schalten in den Rückwärtsgang erfordert eine entsprechend ausgelegte Synchronisierung. Es ist wünschenswert, diese Synchronisierung zu verkleinern.

In diesem Zusammenhang wird auf die EP 1 271 014 A2 hingewiesen, welche ebenfalls eine Betätigungsvorrichtung für ein Schaltgetriebe aufzeigt. Weiter wird auch auf die DE 10 2008 052 139 A1 verwiesen, welche eine Multifunktionshülse für ein Schaltgetriebe offenbart. Daneben wird auch auf die DE 103 09 407 A1 hingewiesen, welche eine Schaltgabel mit einem gabelförmigen Grundkörper aus Blech zeigt. Ausserdem wird auf die JP 4 083958 A hingewiesen, welche eine Betätigungsvorrichtung für ein Schaltgetriebe zeigt.

Zur Verringerung der benötigten Synchronisierungsleistung wird im Stand der Technik vorgeschlagen, durch Ansynchronisieren eine Abbremsung der Eingangswelle beim Einschalten des Rückwärtsgangs zu erreichen, siehe DE 19 539 599 A1. Die in dieser Anmeldung vorgeschlagene Lösung ist allerdings mechanisch aufwändig und kompliziert und daher auch teuer.

### Offenbarung der Erfindung

Aufgabe der Erfindung ist es, eine verbesserte Betätigungsvorrichtung für ein Schaltgetriebe und eine verbesserte Rastierungshülse anzugeben, wobei die Betätigungsvorrichtung möglichst platzsparend in einem möglichst kleinen Getriebegehäuse untergebracht werden können soll.

Die Aufgabe wird mit einer Betätigungsvorrichtung gemäß Anspruch 1 und einer Rastierungshülse gemäß dem nebengeordneten Anspruch gelöst. Vorteilhafte Ausgestaltungen ergeben sich aus den Unteransprüchen.

Rastierungshülsen von Schaltgetrieben weisen ein Schaltfenster auf, welches dazu dient, einen Eingriff einer Schaltgabel zu ermöglichen. Dabei kann die Schaltgabel beispielsweise federbelastet in das Schaltfenster eingedrückt werden, wobei es zu dem Einlegen des betreffenden Gangs kommt. Übrige Bereiche der Rastierungshülse dienen zumindest teilweise als Sperrfläche und sperren einen Eingriff der anderen Schaltgabeln des Getriebes.

Erfindungsgemäß ist in der Sperrfläche eine Vertiefung angeordnet, die derart platziert ist, dass bei einer Bewegung der Rastierungshülse in eine Position für einen Eingriff der ersten Schaltgabel in das Schaltfenster eine zweite Schaltgabel zumindest zeitweise mit der Vertiefung in Eingriff gelangt. Die Vertiefung ist derart ausgebildet, dass eine Ansynchronisation mit der zweiten Schaltgabel erreicht wird. Dabei ist ein besonders bevorzugter Aspekt der Erfindung, dass die erste Schaltgabel eine Rückwärtsgangschaltgabel zur Betätigung eines Rückwärtsgangs des Schaltgetriebes ist. Die zweite Schaltgabel ist vorzugsweise eine von einer Mehrzahl von Vorwärtsgangschaltgabeln zur Betätigung eines Vorwärtsgangs. Dies bedeutet, dass bei einer Bewegung der Rastierungshülse in eine Position für einen Eingriff der Rückwärtsgangschaltgabel bevorzugt ein Eingriff einer Vorwärtsgangschaltgabel, vorzugsweise der Schaltgabel für den dritten Gang, mit der Vertiefung in Eingriff gelangt. Auf diese Weise wird der betreffende Vorwärtsgang ansynchronisiert. Dies bietet den Vorteil, dass die Eingangswelle abgebremst wird und ein Einlegen des Rückwärtsgangs erleichtert wird.

Ein bevorzugter Aspekt der Erfindung ist, dass der Eingriff der Vorwärtsgangschaltgabel in der Vertiefung zur Ansynchronisation während der Bewegung für einen Eingriff der Rückwärtsgangschaltgabel in das Schaltfenster erfolgt. Besonders bevorzugt wird dabei, dass bei eingelegtem Rückwärtsgang, also bei Eingriff der Rückwärtsgangschaltgabel in das Schaltfenster, der Eingriff mit der Vertiefung bereits wieder gelöst ist.

Bevorzugte Möglichkeiten der Erfindung für die Ansynchronisation sind, dass der Sperrradius der zweiten Schaltgabel bzw. der Vorwärtsgangschaltgabel in Eingriff mit der Vertiefung gelangt oder ein spezielles Anbauteil der zweiten Schaltgabel, wobei das Anbauteil anmontiert oder integral mit der Schaltgabel ausgeführt sein kann.

Vorteilhafterweise umfasst die Rastierungshülse eine Kulisse mit einer Rückwärtsgangschaltgasse, wobei die Bewegung einer Anwahl der Rückwärtsgangschaltgasse entspricht. Dies bedeutet, dass bei Anwahl der Rückwärtsgangschaltgasse ein Eingriff der Vorwärtsgangschaltgabel mit der Vertiefung erfolgt für eine Ansynchronisation des Vorwärtsgangs.

Vorzugsweise umfasst die Vertiefung Auslaufschrägen oder Einlaufschrägen. Auf diese Weise wird eine gleitende ruckfreie Bewegung ermöglicht.

Vorzugsweise ist die Vertiefung derart angeordnet, dass bei eingelegtem Rückwärtsgang die zweite Schaltgabel oder die Vorwärtsgangschaltgabel außerhalb der Vertiefung ist. Dabei ist zu berücksichtigen, dass mit den Begriffen "der zweiten Schaltgabel" oder "der Vorwärtsgangschaltgabel" regelmäßig der Sperrradius dieser Schaltgabel oder das entsprechende Anbauteil dieser Schaltgabel gemeint ist. Ist bei eingelegtem Rückwärtsgang die zweite Schaltgabel bzw. die Vorwärtsgangschaltgabel außerhalb der Vertiefung, so stellt dies sicher, dass lediglich der Rückwärtsgang eingelegt ist und es nicht zu einem Schleifen eines anderen Ganges kommt.

Es sollte betont werden, dass jeder Vorwärtsgang für die Ansynchronisation geeignet ist. Soweit hier von "der Vorwärtsgangschaltgabel" die Rede ist, ist damit grundsätzlich gemeint, dass eine von einer Mehrzahl von Vorwärtsgangschaltgabeln für die Ansynchronisation verwendet wird.

Vorzugsweise ist an der Rastierungshülse eine Rampe zur Betätigung der zweiten Schaltgabel bei einer Positionierung der zweiten Schaltgabel für einen Eingriff mit der Vertiefung angeordnet. Diese Rampe zur Betätigung der zweiten Schaltgabel liegt vorzugweise auf einer gegenüberliegenden Seite der Rastierungshülse wie die Vertiefung.

Vorteilhafterweise umfasst die Schaltgabel eine Feder, welche für ein Zusammenwirken mit der Rampe angeordnet ist. Auf diese Weise lässt sich durch die Feder, welche integral in der zweiten Schaltgabel befestigt ist oder an einem extra Teil anmontiert ist, die Kraft für die Ansynchronisation bei der Betätigung der zweiten Schaltgabel bestimmen. Außerdem wird die Einschaltkraft für die Ansynchronisation über die Rampe definiert. Der Schaltweg für die Ansynchronisation wird durch die Vertiefung auf der Rastierungshülse begrenzt.

Die Rampe ist vorzugsweise so angeordnet, dass bei einer weiteren Betätigung der Rastierungshülse in Richtung des Rückwärtsgangs, d.h. bei Einwahl in die Rückwärtsganggasse einer Kulisse der Rastierungshülse, eine Betätigung der zweiten Schaltgabel durch die Rampe wieder beendet wird. Dabei wird die Schaltgabel durch die Auslaufschräge der Vertiefung wiederum in Neutralposition zurückgezogen. Dadurch ist der Synchronisiervorgang beendet.

Das Zusammenwirken der Rampe mit der Vorwärtsgangschaltgabel ist derart gestaltet, dass beim Betätigen der Rastierungshülse in der Weise, dass die Rückwärtsgangschaltgabel zum Einsatz kommen soll, um den Rückwärtsgang einzulegen, die Rampe auf ein Gegenstück in einer Aufnahme der Vorwärtsgangschaltgabel aufläuft. Hierbei findet ein Ansynchronisieren der Vorwärtsgangschaltgabel statt. Das Ansynchronisieren führt dazu, dass der Vorwärtsgang zwar nicht eingelegt wird aber die ersten Schritte zum Einlegen des Vorwärtsgangs in die Wege geleitet werden. Der Vorteil ist, dass gerade bei schlechten, heißt beengten Platzverhältnissen innerhalb des Getriebegehäuses die verschiedenen Vorwärtsgangschaltgabeln und die Rückwärtsgangschaltgabel sich nicht gegenseitig behindern können.

Hierbei wird das Gegenstück gegen die Kraft der Feder in die Aufnahme hineingedrückt je weiter die Rampe in Richtung zu dem Gegenstück der Vorwärtsschaltgabel bewegt wird. Bei der Bewegung der Rastierungshülse in Richtung des Gegenstücks, verschiebt sich die Sperrfläche derart, dass die Vorwärtsgangschaltgabel dann nicht durch das Sperrfläche blockiert wird, sondern vielmehr in das Schaltfenster hineingleiten kann.

Dies führt dazu, dass beim Eingreifen der Rückwärtsgangschaltgabel in das Schaltfenster durch die Rampe, welche in irgendeiner Weise fester Bestandteil der Rastierungshülse ist, die Vorwärtsgangschaltgabel ansynchronisiert wird.

Wäre das Zusammenspiel der Rampe mit dem Gegenstück der Vorwärtsgangschaltgabel nicht vorhanden, würde dies dazu führen, dass die zu dem Gegenstück bewegte Rastierungshülse die Vorwärtsgangschaltgabel in Funktion versetzen würde, was wiederum bedeuten würde, dass gleichzeitig auch der Vorwärtsgang eingelegt werden würde. Aber dank des Zusammenspiels der Rampe mit der Vorwärtsgangschaltgabel findet nur ein Ansynchronisieren, aber kein Einlegen des Vorwärtsgangs statt, während der Rückwärtsgang aber eingelegt werden kann, da die Rückwärtsgangschaltgabel in das Schaltfenster eingreifen kann.

### Figurenbeschreibung

Nachfolgend wird die Erfindung anhand einiger Zeichnungen näher erläutert, wobei die Zeichnungen zeigen:
- Fig. 1: zeigt eine erfindungsgemäße Betätigungsvorrichtung für ein Schaltgetriebe in einer schematischen, perspektivischen Ansicht; und
- Fig. 2: zeigt die Betätigungsvorrichtung der Fig. 1 in einer teilweisen, schematischen Schnittansicht
- Figur 3: zeigt eine andere Ansicht der Figur1 im Teilausschnitt;
- Figur 4: zeigt eine Teilansicht der Figur 1 von schräg oben;
- Figur 5: zeigt eine perspektivische Seitenansicht eines Teils einer erfindungsgemässen Rastierungshülse;
- Figur 6: zeigt die Rastierungshülse aus Figur 5 in einer perspektivischen Ansicht von schräg oben.

### Beschreibung eines bevorzugten Ausführungsbeispiels

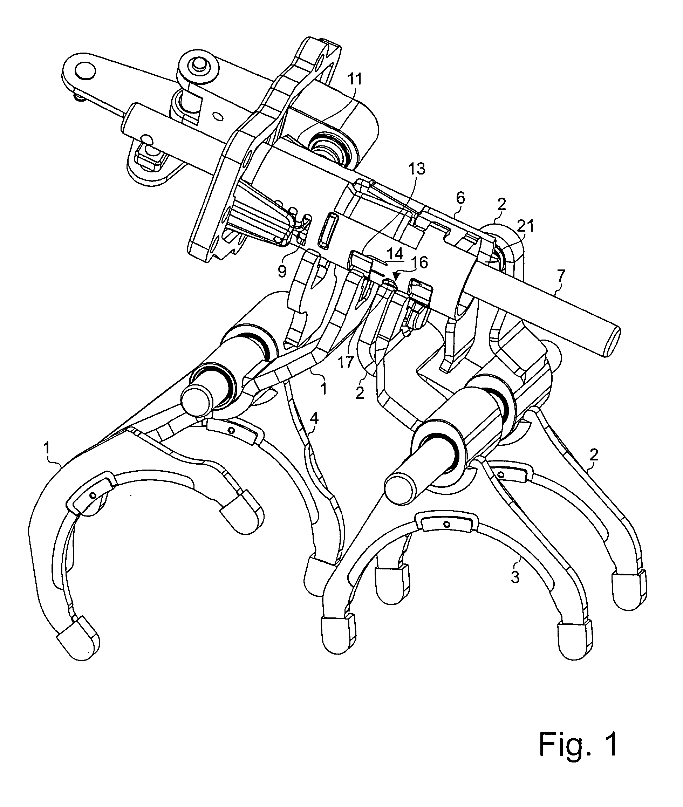

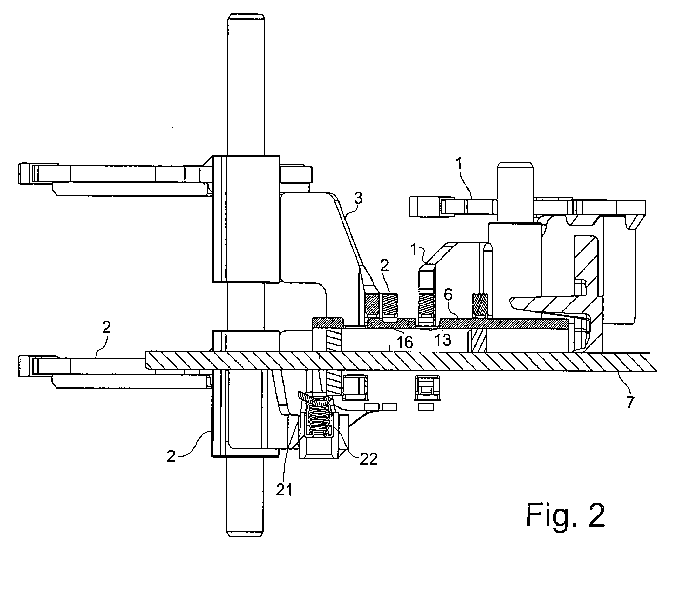

In den Figuren 1 und 2 ist eine Betätigungsvorrichtung für ein Schaltgetriebe mit einer erfindungsgemäßen Rastierungshülse zumindest teilweise dargestellt. Die beiden Figuren werden zusammenhängend beschrieben, wobei für gleiche Teile gleiche Bezugszeichen verwendet werden.

Die Fig. 1 zeigt schematisch in einer perspektivischen Ansicht eine erfindungsgemäße Betätigungsvorrichtung. Die Betätigungsvorrichtung umfasst insgesamt vier Schaltgabeln, nämlich eine Rückwärtsgangschaltgabel 1, auch als erste Schaltgabel bezeichnet, eine Vorwärtsgangschaltgabel 2 für den dritten und den vierten Gang, auch als zweite Schaltgabel bezeichnet, und zwei weitere Vorwärtsgangschaltgabeln 3 und 4. Die weiteren Vorwärtsgangschaltgabeln 3 und 4 dienen jeweils zur Betätigung des ersten und zweiten Gangs bzw. des fünften und sechsten Gangs.

Zur Betätigung und Führung der Schaltgabeln 1 bis 4 ist eine Rastierungshülse 6 vorgesehen, die auf einer Schaltwelle 7 angeordnet ist. Die Rastierungshülse 6 umfasst eine Kulisse 9, die Gassen für die einzelnen Gänge aufweist.

Gegenüberliegend der Kulisse 9 ist eine Kontur 11 vorgesehen, welche ein kinematisches Verhalten eines Schalthebels des Schaltgetriebes derart beeinflusst, dass beispielsweise ohne eingelegten Gang der Schalthebel in eine Mittelposition gelangt. Diese Schalt- oder Wähl-Kontur 11 ist zu unterscheiden von weiteren Ausformungen der Rastierungshülse 6, welche erfindungsgemäß vorgesehen sind.

Die Rastierungshülse 6 umfasst ein Schaltfenster 13, welches dazu dient, in Eingriff mit einer zu betätigenden Schaltgabel gebracht zu werden. Dabei wird über die Kulisse 9 die relative Lage der Rastierungshülse 6 zu den Schaltgabeln 1 bis 4 derart festgelegt, dass jeweils genau eine Schaltgabel betätigbar ist. Um das Schaltfenster 13 herum ist eine Sperrfläche 14 angeordnet, die verhindert, dass eine andere als die zu betätigende Schaltgabel betätigt wird. In der Sperrfläche 14 ist eine Vertiefung 16 vorgesehen, welche für die erfindungsgemäße Ansynchronisation verwendet wird.

In der in Fig. 1 gezeigten Position der Schalthülse 6 ist die Vertiefung in Eingriff mit der (Vorwärtsgang-) Schaltgabel 2, sodass der dritte Gang ansynchronisiert wird. Die (Rückwärts-) Gangschaltgabel 1 steht unmittelbar vor einem Eingriff in das Schaltfenster 13. Anzumerken ist, dass bei einer weiteren Drehung der Rastierungshülse 6 die Schaltgabel 2 über eine Auslaufschräge 17 wieder in eine Position gebracht wird, in welcher sie auf der Sperrfläche 14 aufliegt, sodass kein Eingriff des dritten Gangs, welcher mit der Vorwärtsgangschaltgabel 2 angesteuert wird, auftritt. Die Bewegung der Schaltgabel 2 in die Vertiefung 16 hinein wird über eine Rampe und eine an der (Vorwärtsgang-) Schaltgabel 2 angeordnete Feder erreicht, die im Zusammenhang mit der Fig. 2 erläutert werden. In der Fig. 1 ist lediglich ein Teil der Rampe 21 zu erkennen.

Allgemein ist noch darauf hinzuweisen, dass manche Bezugszeichen zweimal an einem der Teile der erfindungsgemäßen Vorrichtung gezeigt sind, um besser zu verdeutlichen, welche Teile in der Zeichnung zusammen gehören.

In der Fig. 2 ist die auf der Rastierungshülse 6 ausgebildete Rampe 21 im Schnitt gezeigt. Ansonsten ist die Rastierungshülse im unteren Teil der Fig. 2 nicht dargestellt, sondern lediglich im oberen Teil der Fig. 2. Die Rampe 21 wirkt mit einer Feder 22 zusammen, welche in einem Anbauteil der (Vorwärtsgang-) Schaltgabel 2 untergebracht ist. Durch die Rampe 21 und die Feder 22 wird die (Vorwärtsgang-) Schaltgabel 2 in der Fig. 2 nach unten gedrückt, sodass die (Vorwärtsgang-) Schaltgabel 2 auf der gegenüberliegenden Seite der Rastierungshülse 6 mit ihrer Nase in die Vertiefung 16 hineingedrückt wird. Auf diese Weise kommt es zu einer Ansynchronisation des dritten Gangs.

In der in der Fig. 2 dargestellten Position ist die Rückwärtsgangschaltgabel 1 noch nicht in Eingriff mit dem Schaltfenster 13. Es sollte angemerkt werden, dass beim Auslegen des Rückwärtsgangs ebenso der dritte Gang ansynchronisiert wird, da derselbe Weg von der Rastierungshülse 6 nun wiederum in andere Richtung beschritten wird. Dies ist allerdings unproblematisch, da das Fahrzeug im Stillstand ist.

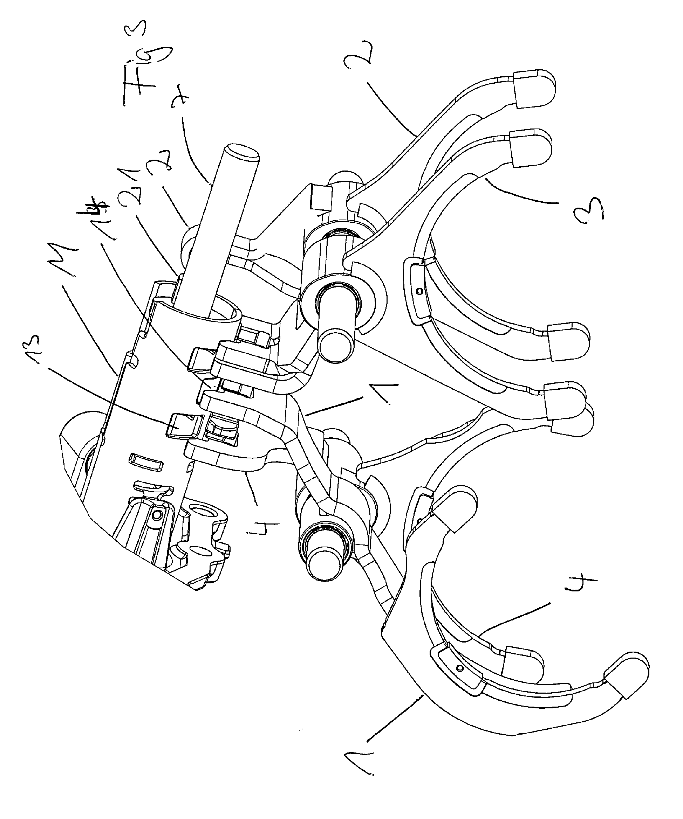

Die Figur 3 zeigt eine weitere Ansicht der Figur 1 im Teilausschnitt. Dort ist wiederum die Rückwärtsgangschaltgabel 1 zu erkennen. Daneben sind die Vorwärtsgangschaltgabeln 2, 3, 4 gezeigt. Die Rückwärtsgangschaltgabel 1 gleitet hierbei entlang des Schaltfensters 13. Der Schaltfenster 13 ist eine nicht durchbrochene Stelle einer Rastierungshülse 6. außerdem ist in Figur 3 die Rampe 21 teilweise gezeigt. Die Rampe 21 wirkt dabei mit der Vorwärtsgangschaltgabel 2 zusammen.

Das Zusammenwirken ist derart gestaltet, dass beim Betätigen der Rastierungshülse 6 in der Weise, dass die Rückwärtsgangschaltgabel 1 betätigt werden soll, die Rampe 21 dazu führt, dass sie Vorwärtsgangschaltgabel 2 ebenfalls teilweise betätigt wird. Hierbei findet ein Ansynchronisieren der Vorwärtsgangschaltgabel 2 oder der Vorwärtsgangschaltgabel 3 statt. Das Ansynchronisieren führt dazu, dass der Vorwärtsgang zwar nicht eingelegt wird aber die ersten Schritte zum einlegen des Vorwärtsgangs in die Wege geleitet werden. Dies hat zum Vorteil, dass gerade bei schlechten Platzverhältnissen innerhalb des Getriebegehäuses die verschiedenen Vorwärtsgangschaltgabel 2, 3, 4 und die Rückwärtsgangschaltgabel 1 sich nicht gegenseitig behindern können.

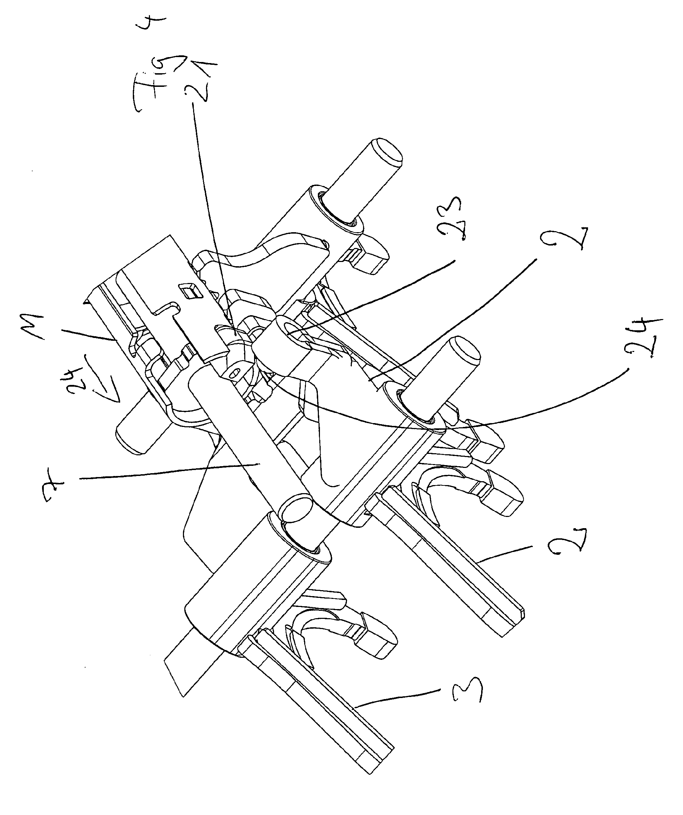

In Figur 4 ist nun dargestellt, wie die Rampe 21 mit der Vorwärtsgangschaltgabel 2 zusammenwirkt. Die Rampe 21 weist hierzu eine sich zur Schaltwelle 7 hin verjüngende Struktur auf. Es ist hierbei unbeachtlich, ob die Rampe 21 einstückig mit der Rastierungshülse 6 ausgebildet ist oder, ob die Rampe 21 autark von der Rastierungshülse 6 ausgebildet aber fest verbunden ist. Außerdem ist in der Figur 4 zu erkennen, wie die Vorwärtsgangschaltgabel 2 eine Aufnahme 23 ausbildet, in der die Feder 22 integriert ist. Daneben ist ein Gegenstück 24 mit einer abgerundeten Oberfläche gezeigt, welche mit der Rampe 21 der Art zusammenwirken kann, dass das Gegenstück 24 entlang der Oberfläche der Rampe 21 gleiten kann. Hierbei wird das Gegenstück 24 gegen die Kraft der nicht gezeigten Feder 22 in die Aufnahme 23 hineingedrückt je weiter die Rampe 21 in Richtung eines Pfeils 24 bewegt wird. Bei der Bewegung der Rastierungshülse 6 in Richtung des Pfeils 24, wie er Figur 4 gezeigt ist, verschiebt sich die Sperrfläche 14 derart, dass die Rückwärtsgangschaltgabel 1 dann nicht, wie in Figur 3 gezeigt, durch die Sperrfläche 14 blockiert wird, sondern vielmehr, wie in der Figur 1 gezeigt in das Schaltfenster 13 hinein gleiten kann.

Dies führt dazu, dass beim Eingreifen der Rückwärtsgangschaltgabel 1 in das Schaltfenster 13 durch die Rampe 21, welche in irgendeiner Weise fester Bestandteil der Rastierungshülse M ist die Vorwärtsgangschaltgabel 2 beziehungsweise die Vorwärtsgangschaltgabel 3 ansynchronisiert.

Wäre das Zusammenspiel der Rampe 21 mit dem Gegenstück 24 der Vorwärtsgangschaltgabel 2 nicht vorhanden, würde dies dazu führen, dass die in Pfeilrichtung des Pfeils 24 bewegte Rastierungshülse 6 die Vorwärtsgangschaltgabel 2 in Funktion versetzen würde, was bedeuten würde, dass gleichzeitig auch der Vorwärtsgang eingelegt werden würde. Aber dank des Zusammenspiels der Rampe 21 mit der Vorwärtsgangschaltgabel 2 findet lediglich ein Ansynchronisieren, aber kein Einlegen des Vorwärtsgangs statt, während der Rückwärtsgang aber eingelegt werden kann, da die Rückwärtsgangschaltgabel 1 in das Schaltfenster 13 eingreifen kann.

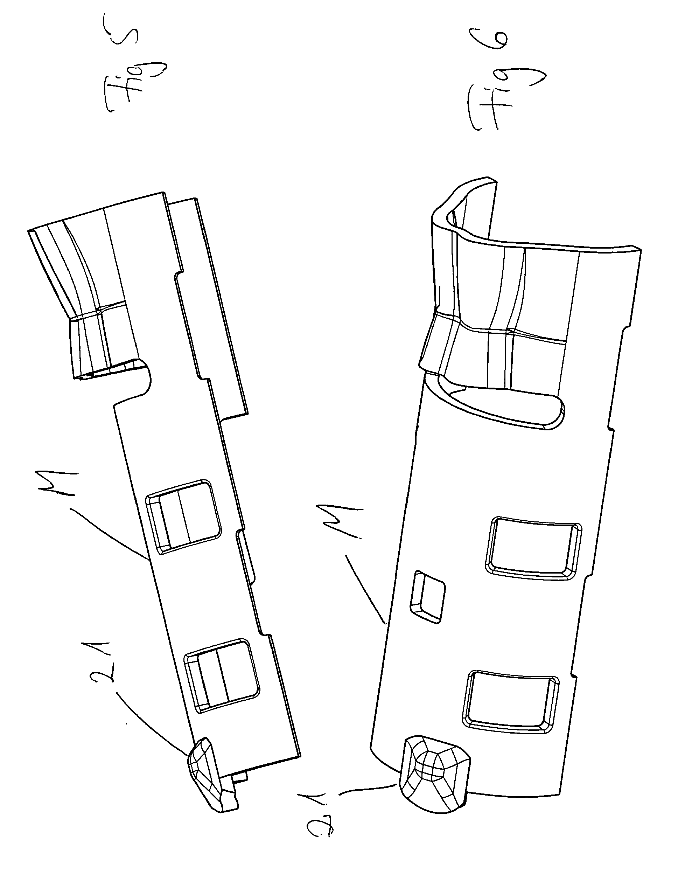

In den Figuren 5 und 6 ist nochmals im Einzelnen ein Teil der Rastierungshülse 6 gezeigt. Dort ist besonders gut zu erkennen, wie die Rampe 21 als Teil der Rastierungshülse 6 ausgebildet ist.

Die Erfindung ist nicht auf das vorstehend beschriebene bevorzugte Ausführungsbeispiel beschränkt. Vielmehr wird der Schutzbereich durch die Ansprüche beschränkt.

### Positionszahlenliste

- 1: Rückwärtsgangschaltgabel
- 2: Vorwärtsgangschaltgabel
- 3: Vorwärtsgangschaltgabel
- 4: Vorwärtsgangschaltgabel
- 5:
- 6: Rastierungshülse
- 7: Schaltwelle
- 8:
- 9: Kulisse
- 10:
- 11: Kontur
- 12:
- 13: Schaltfenster
- 14: Sperrfläche
- 15:
- 16: Vertiefung
- 17: Auslaufschräge
- 18:
- 19:
- 20:
- 21: Rampe
- 22: Feder
- 23: Aufnahme
- 24: Pfeil

## Patentansprüche

1. Betätigungsvorrichtung für ein Schaltgetriebe mit einer Rastierungshülse (6) zum Betätigen von Schaltgabeln (1-4), wobei die Rastierungshülse (6) umfasst:
ein Schaltfenster (13) zum Eingriff zumindest einer der Schaltgabeln (1-4),
eine Sperrfläche (14) zum Sperren eines Eingriffs der anderen der Schaltgabeln (1-4), und
eine in der Sperrfläche (14) angeordnete Vertiefung (16), die angeordnet ist, so dass bei einer Bewegung der Rastierungshülse (6) in eine Position für einen Eingriff einer ersten der Schaltgabeln (1) in das Schaltfenster (14) eine zweite der Schaltgabeln (2) mit der Vertiefung (16) in Eingriff gelangt, **gekennzeichnet dadurch, dass** an der Rastierungshülse (6) eine Rampe (21) zur Betätigung der zweiten Schaltgabel (2) bei einer Positionierung der zweiten Schaltgabel (2) für einen Eingriff mit der Vertiefung (16) angeordnet ist.

2. Betätigungsvorrichtung nach Anspruch 1, **dadurch gekennzeichnet, dass** die erste Schaltgabel (1) als Rückwärtsgangschaltgabel (1) zur Betätigung eines Rückwärtsganges des Schaltgetriebes eingerichtet ist und/oder die zweite Schaltgabel (2) als Vorwärtsgangschaltgabel (2) zur Betätigung eines Vorwärtsgangs des Schaltgetriebes eingerichtet ist.

3. Betätigungsvorrichtung nach Anspruch 2, **dadurch gekennzeichnet, dass** die Rastierungshülse (6) eine Kulisse (9) mit einer Rückwärtsgangschaltgasse umfasst, wobei die Bewegung einer Anwahl der Rückwärtsgangschaltgasse entspricht.

4. Betätigungsvorrichtung nach einem der vorhergehenden Ansprüche, **dadurch gekennzeichnet, dass** die Vertiefung (16) zumindest eine Auslaufschräge (17) umfasst.

5. Betätigungsvorrichtung nach einem der vorhergehenden Ansprüche, **dadurch gekennzeichnet, dass** die Vertiefung (16) derart angeordnet ist, dass bei eingelegtem Rückwärtsgang die zweite Schaltgabel (2) außerhalb der Vertiefung (16) ist und/oder nicht mit der Vertiefung (16) in Eingriff steht.

6. Betätigungsvorrichtung nach Anspruch 5, **dadurch gekennzeichnet, dass** zwischen der Rampe (21) und der zweiten Schaltgabel (2) eine Feder (22) angeordnet ist.

7. Betätigungsvorrichtung nach einem der vorhergehenden Ansprüche, **dadurch gekennzeichnet, dass** die Vertiefung (16) ausgebildet ist, so dass bei einem Eingriff der zweiten Schaltgabel (2) in die Vertiefung (16) ein Vorwärtsgang des Schaltgetriebes ansynchronisiert wird.

8. Betätigungsvorrichtung nach einem der vorhergehenden Ansprüche, **dadurch gekennzeichnet, dass** die zweite Schaltgabel (2) zur Betätigung des dritten Vorwärtsgangs des Schaltgetriebes geeignet ist.

## Claims

1. An actuating device for a manual transmission with a selector sleeve (6) for actuating shift forks (1-4), the selector sleeve (6) comprising:
a shift window (13) for engaging at least one of the shift forks (1-4),
a blocking surface (14) for blocking engagement of the other one of the shift forks (1-4),
and
a recess (16) arranged in the blocking surface (14), which recess is arranged so that upon a movement of the selector sleeve (6) into a position for engaging a first one of the shift forks (1) into the shift window (14) a second one of the shift forks (2) engages with the recess (16),
**characterised in that** a ramp (21) for actuating the second shift fork (2) when the second shift fork (2) is positioned for engagement with the recess (16) is arranged on the selector sleeve (6).

2. An actuating device according to Claim 1, **characterised in that** the first shift fork (1) is set up as a reverse gear shift fork (1) for actuating a reverse gear of the manual transmission and/or the second shift fork (2) is set up as a forward gear shift fork (2) for actuating a forward gear of the manual transmission.

3. An actuating device according to Claim 2, **characterised in that** the selector sleeve (6) comprises a gate (9) with a reverse gear shift alley, the movement corresponding to a selection of the reverse gear shift alley.

4. An actuating device according to one of the preceding claims, **characterised in that** the recess (16) comprises at least one run-out slope (17).

5. An actuating device according to one of the preceding claims, **characterised in that** the recess (16) is arranged such that when reverse gear is engaged the second shift fork (2) is outside the recess (16) and/or is not engaged with the recess (16).

6. An actuating device according to Claim 5, **characterised in that** a spring (22) is arranged between the ramp (21) and the second shift fork (2).

7. An actuating device according to one of the preceding claims, **characterised in that** the recess (16) is formed so that upon engagement of the second shift fork (2) in the recess (16) a forward gear of the manual transmission is initially synchronised.

8. An actuating device according to one of the preceding claims, **characterised in that** the second shift fork (2) is suitable for actuating the third forward gear of the manual transmission.

## Revendications

1. Dispositif d'actionnement pour boîte de vitesses avec un manchon d'encliquetage (6) destiné à actionner des fourches de boîte de vitesses (1 à 4), le manchon d'encliquetage (6) comportant:
une fenêtre de commutation (13) destinée à venir en prise avec au moins l'une des fourches de boîte de vitesses (1 à 4),
une face de blocage (14) destinée à venir en prise avec les autres des fourches de boîte de vitesses (1 à 4), et
une cavité (16) aménagée dans la surface de blocage (14) qui est aménagée de sorte que, lors d'un déplacement du manchon d'encliquetage (6) vers une position pour une venue en prise d'une première desdites fourches de boîte de vitesses (1) dans la fenêtre de commutation (14), une deuxième des fourches de boîte de vitesses (2) vienne en prise avec la cavité (16),
**caractérisé par le fait que** sur le manchon d'encliquetage (6) est disposée une rampe (21) pour l'actionnement de la deuxième fourche de boîte de vitesses (2) lors d'un positionnement de la deuxième fourche de boîte de vitesses (2) de manière à venir en prise avec la cavité (16).

2. Dispositif d'actionnement selon la revendication 1, **caractérisé par le fait que** la première fourche de boîte de vitesses (1) est réalisée sous forme de fourche de boîte de vitesses de marche arrière et/ou la deuxième fourche de boîte de vitesses (2) est réalisée sous forme de fourche de boîte de vitesses de marche en avant (2) pour l'actionnement d'une marche en avant de la boîte de vitesses.

3. Dispositif d'actionnement selon la revendication 2, **caractérisé par le fait que** le manchon d'encliquetage (6) comporte une coulisse (9) avec un couloir de commutation de marche arrière, le déplacement correspondant à un nombre du couloir de commutation de marche arrière.

4. Dispositif d'actionnement selon l'une des revendications précédentes, **caractérisé par le fait que** la cavité (16) comporte au moins une face oblique de sortie (17).

5. Dispositif d'actionnement selon l'une des revendications précédentes, **caractérisé par le fait que** la cavité (16) est aménagée de sorte que, en cas de marche arrière établie, la deuxième fourche de boîte de vitesses (2) se trouve en dehors de la cavité (16) et/ou n'est pas en prise avec la cavité (16).

6. Dispositif d'actionnement selon la revendication 5, **caractérisé par le fait qu'**entre la rampe (21) et la deuxième fourche de boîte de vitesses (2) est disposé un ressort (22).

7. Dispositif d'actionnement selon l'une des revendications précédentes, **caractérisé par le fait que** la cavité (16) est réalisée de sorte que, en cas d'engagement de la deuxième fourche de boîte de vitesses (2) dans la cavité (16), une vitesse de marche en avant de la boîte de vitesses devient non synchronisée.

8. Dispositif d'actionnement selon l'une des revendications précédentes, **caractérisé par le fait que** la deuxième fourche de boîte de vitesses (2) convient pour l'actionnement de la troisième vitesse de marche en avant de la boîte de vitesses.
